# EUROPÄISCHE PATENTSCHRIFT

(11) **EP 0 748 479 B1**
(45) Veröffentlichungstag und Bekanntmachung des Hinweises auf die Patenterteilung: **09.05.2001**
(21) Anmeldenummer: 95912169.0
(22) Anmeldetag: 27.02.1995
(51) Int. Cl.: G06F 9/46

(54) **MUSTERERKENNUNGSVERFAHREN UND -SYSTEM MIT EINEM ODER MEHREREN PROZESSOREN**
PATTERN RECOGNITION METHOD AND SYSTEM WITH ONE OR MORE PROCESSORS
METHODE ET SYSTEME DE RECONNAISSANCE DE STRUCTURES AVEC UN OU PLUSIEURS PROCESSEURS

(30) Priorität: 28.02.1994 DE 4406919
(43) Veröffentlichungstag der Anmeldung: 18.12.1996
(73) Patentinhaber: SIEMENS AKTIENGESELLSCHAFT, 80333 München (DE)
(72) Erfinder: KEH, Stefan, D-78315 Radolfzell (DE); VON DRACHENFELS, Heiko, D-78462 Konstanz (DE)
(86) Internationale Anmeldenummer: EP9500715
(87) Internationale Veröffentlichungsnummer: WO9523375

(56) Entgegenhaltungen:
- OPTICAL ENGINEERING, USA, Bd. 32, Nr. 6, Juni 1993 ISSN 0091-3286, Seiten 1167-1192, XP 000381780 CARLO S. REGAZZONI ET AL.: 'Distributed hierarchical regularization system for recognition of planar surfaces'
- LOCAL NETWORKS FOR COMPUTER COMMUNICATIONS. PROCEEDINGS OF THE IFIP WORKING GROUP 6.4 INTERNATIONAL WORKSHOP ON LOCAL NETWORKS, ZURICH, CH, 27.August 1980 - 29.August 1980 ISBN 0-444-86287-0, 1981, AMSTERDAM, NL, NORTH-HOLLAND, Seiten 319-354, RICHARD F. RASHID: 'An inter-process communication facility for UNIX'
- MICROPROCESSING & MICROPROGRAMMING, NETHERLANDS, Bd. 15, Nr. 5, Mai 1985 ISSN 0165-6074, Seiten 233-251, GIORGIO CATTANEO ET AL.: 'CHILL Concurrency on Intel iAPX 432 Architecture'
- PROCEEDINGS OF THE IEEE, US, Bd. 80, Nr. 7, Juli 1992 ISSN 0018-9219, Seiten 1101-1119, JÜRGEN SCHÜRMANN ET AL.: 'Document analysis-from pixels to contents'
- PROCEEDINGS OF THE IEEE 1991 NATIONAL AEROSPACE AND ELECTRONICS CONFERENCE NAECON 1991 (CAT. NO.90CH3007-2), DAYTON, OH, USA, Bd. 2, 20.Mai 1991 - 24.Mai 1991 ISBN 0-7803-0085-8, NEW YORK, NY, USA, IEEE, Seiten 627-630, XP 000312585 JOSEPH K. CROSS ET AL.: 'Communications among distributed Ada programs'
- FUTURE GENERATION COMPUTER SYSTEMS, NETHERLANDS, Bd. 6, Nr. 3, Dezember 1990 ISSN 0167-739X, Seiten 209-223, XP 000243832 DIETER WYBRANIETZ ET AL.: 'The LADY programming environment for distributed operating systems'

## Beschreibung

Die vorliegende Erfindung betrifft das Gebiet von Muster- und Schrifterkennung, insbesondere ein Mustererkennungssystem mit N-Prozessoren, und mit einer Datenhaltung für aus Anwendungsalgorithmen bestehenden Prozessen, deren Datenmodell aus Objekten, Links zum Verbinden von Objekten und Attributen zum Beschreiben von Objekten besteht.

In den letzten Jahren ist als Konsequenz aus der komplexen Problemstellung bei der Muster- und insbesondere Schrifterkennung ein zu objektorientierten Programmiersprachen (OOPS) und objektorientierten Datenmodellen (OODM) analoger, objektbezogener Ansatz entwickelt worden. Auch hier ist der Kerngedanke, daß mit allen anfallenden Daten der Mustererkennung begriffliche Objekte beschrieben werden, die es explizit zu repräsentieren gilt. Dazu ist bereits aus den Proceedings of the IEEE vol 80, Seite 1116 - 1119, PMFT-Verbundprojekt Förderkennzeichen ITM 8501 A 01.01.1985 - 31.03.1989 Seite 114 bis 127, eine Datenhaltung auf einem Datenmodell bekannt, das aus Objekten zum Repräsentieren von Erkennungsobjekten, Verbindungen zwischen Objekten zum Repräsentieren struktureller Informationen für das Erkennungsobjekt und Attributen zum Beschreiben von Objekten besteht. Alle Erkennungsalgorithmen beziehen ihre Eingabedaten aus dieser Datenhaltung und legen ihre Ausgabedaten dort wieder ab. Damit ist eine klare Trennung der erkennungsalgorithmischen Aspekte von den Verwaltungs- und Steueraspekten erreichbar. Insbesondere kann der Notwendigkeit entsprochen werden, Erkennungsalgorithmen anwendungsspezifisch zu entwickeln. Diese zeigt sich schon darin, daß die Erkennungsqualität z.B. die Lese- und Fehlerrate von Anschriftenlesern, datensatzabhängig ist. Bei einer gegebenen Anwendung werden daher immer diejenigen Algorithmen, die die besseren Ergebnisse liefern, die alles, was bereits vorab über die zu erkennenden Datensätze bekannt ist, für die Erkennung ausnutzen. Einfache Beispiele für vorab bekannte Eigenschaften von Datensätzen sind bei Schrifterkennungssystemen, etwa Schrifttyp, Schriftgröße, ein eingeschränkter Wortschatz oder die Position der zu erkennenden Schrift in einem Dokument. Gleichzeitig kann damit dem Wunsch nach Wiederverwendung der Algorithmen entsprochen werden. Die Erkennungsverfahren sollen auf unterschiedlichen Rechnertypen mit unterschiedlichen Betriebssystemen realisierbar sein und sich auch möglichst leicht an neue Problemstellungen anpassen lassen.

Da Erkennungsalgorithmen bei anspruchsvollen Problemstellungen sehr rechenaufwendig sind, lassen sich die bei praktischem Einsatz erforderlichen Durchsätze nur auf Parallelrechnern erreichen, wobei einige Bearbeitungsschritte mit Spezial-Hardware unterstützt werden müssen. Die aus o. g. Stand der Technik bekannten Erkennungssysteme sind jedoch als Ein-Prozess-Systeme konzipiert.

In "Distributed hierarchical regularization system for recognition of planar surfaces", Optical Engineering, 32(1993)June, No.6, Bellingham, p. 1167-1192, wird ein verteiltes Erkennungssystem für Oberflächen in einer 3D-Szene beschrieben. Es wird eine hierarchische Aufgabenverteilung zur Lösung des Erkennungsproblems vorgeschlagen, bei dem beginnend mit den elementaren Sensordaten einfache Beobachtungen schrittweise zu komplexen Beobachtungen zusammengefaßt werden. Jede Teilaufgabe wird einem Prozeß übertragen, und die hierarchischen Beziehungen der Teilaufgaben zueinander werden auf Kommunikationsbeziehungen der Prozesse untereinander abgebildet.
Eine Datenhaltung, d.h. Verwaltung von Anwendungsdaten mit vom Anwender definierbarer komplexer Struktur auf der Grundlage eines angemessenes Datenmodells erfolgt nicht. Damit können die Algorithmen nicht unabhängig von der Struktur des Zielsystems laufen.
In "Inter-Process Communication Facility for UNIX",Local Networks for Computer Communications,North Holland Publishing Company, 1981, p. 319-354, wird ein elementarer Prozeßkommunikations-Mechanismus für Unix beschrieben. Es können Ports genannte Objekte im Betriebssystemkern erzeugt werden, die Nachrichten puffern und Prozesse synchronisieren können. Es wird vorgeschlagen, diese Ports als Abstraktion für jegliche Dienstleistungen (Funktionalitäten) zu verwenden und Systemaufrufe wie z.B. read und write auf das Senden und Empfangen von Nachrichten an bestimmten Ports zurückzuführen (diese Idee wurde tatsächlich bei der Konstruktion moderner Betriebssystemkerne aufgegriffen).
Eine Nachricht fließt über einen Port als eigenständiges Objekt im Betriebssystemkern von einem Prozeß zu einem anderen, d.h. beiden Prozessen, die über solch einen Port kommunizieren, muß dieser Port explizit bekannt sein. Damit besteht keine Unabhängigkeit von der jeweiligen Struktur.

Die der vorliegenden Erfindung zugrunde gelegene Aufgabe besteht darin, ein Verfahren und eine Vorrichtung zur Mustererkennung mit N-Prozessoren zu schaffen, bei dem die Heterogenität des Systems für die Erkennungsalgorithmen verborgen bleibt. Diese Aufgabe wird gelöst durch die Merkmale der Patentansprüche 1 und 8.

Das erfindungsgemäße Mustererkennungssystem bietet eine große Flexibilität beim Aufbau unterschiedlicher, kommunizierender Prozess-Systeme. Erkennungsalgorithmen können ohne Änderung in Ein- oder Mehr-Prozess-Systemen verwendet werden. Das System ist insbesondere als effiziente konfigurierbare und hinsichtlich des Durchsatzes skalierbarer Entwicklungsplattform für Schrifterkennungs-Software zu verwenden.

Weitere vorteilhafte Ausführungsformen der Erfindung sind der Beschreibung und den Unter-Ansprüchen zu entnehmen.

Nachfolgend wird die Erfindung anhand von Zeichnungen genauer beschrieben. Dabei zeigt
- Figur 1:: ein heterogenes Mustererkennungssystem mit N-Prozessoren,
- Figur 2:: den Prozeß eines Mehr-Prozess-Systems

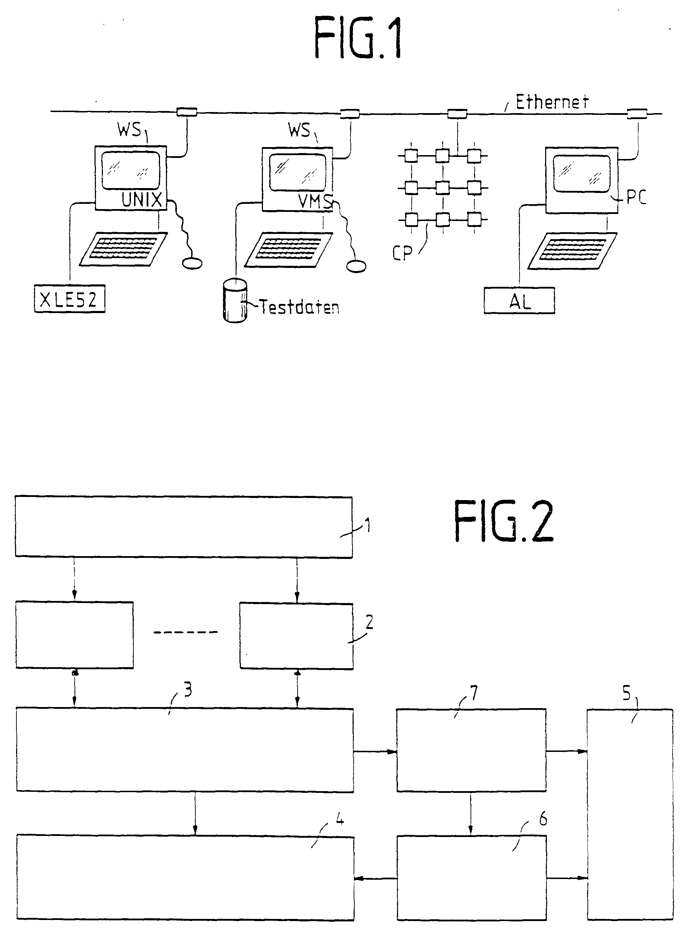

Figur 1 zeigt ein heterogenes integriertes System zur Mustererkennung, wie es beispielsweise zur Schrifterkennung verwendet wird. Ein Adress-Leser erzeugt aus Dokumenten Rohdaten für ein N-Prozessor-System, das aus PC's (PC), Workstations (WS) und verschiedenen Koprozessoren (KP) besteht, die über ein geeignetes Netzwerk miteinander kommunizieren. Ein solches System ist insbesondere auch für die Simulation von Erkennungssystemen geeignet.

Bei dem in Figur 2 gezeigten Mehr-Prozess-System wird durch die Ablaufsteuerung 1 von Anwenderseite die Prozessaufteilung und Datenverteilung festgelegt. Das Datenmodell der Datenhaltung besteht aus Objekten, Links und Attributen. Ein Objekt ist immer ein Objekt der Anwendung z.B. ein konkretes Dokument oder ein Zeichen. Den Objekten sind Attribute zugeordnet. Ein Attribut ist ein beschreibendes Merkmal zu einem Objekt, z.B. eine Größe oder ein Pixelbild. Ein Objekt gehört einem Objekttyp an, ein Attribut einem Attributtyp. Alle Typen sind durch den Anwender zu definieren. Objekte sind durch eine eindeutige Objektkennung und den Objekttyp charakterisiert. Attribute durch die Objektkennung, den Attributtyp und den attributspezifischen Datensatz. Beziehungen zwischen den Objekten werden durch Links repräsentiert. Links sind binär gerichtet, sie verbinden genau zwei Objekte. Links sind typisiert, z.B. Vater-Link, Bruder-Link. Alle Link-Typen werden durch den Anwender definiert. Links haben optional Alternativen. So können z.B. mehrere alternative Lösungswege eines Backtracking-Algorithmus bearbeitet werden. Links sind charakterisiert durch die Quellobjektkennung, die Zielobjektkennung, den Typ und die Alternativen-Nummer.

Ausgehend von diesem Datenmodell kann der Anwender ein Datenschema mit einer beliebten Zahl von Objekttypen, Link-Typen und Attributen definieren. Zusätzlich können Konsistenzbedingungen formuliert werden: Link- und Attributtypen können auf die Verwendung bei bestimmten Objekttypen eingeschränkt werden, Links können als uni- oder bidirektional benutzbar deklariert und in ihre Kardinalität (1:1, 1:n oder n:n) festgelegt werden. Die Alternativen-Nummern ermöglichen es, Links auch unterschiedlicher Typen zu alternativen Pfaden zusammenzufassen. Insbesondere wird die Reihenfolge von Objekt-, Link- und Attributzugriffen durch das jeweils gegebene Erkennungsproblem bestimmt.

Allgemein besteht ein Erkennungsprozess bei einem Schrifterkennungssystem aus einer Mischung von Verarbeitungsschritten zweier verschiedener Typen: Segmentierungsschritten und Beschreibungsschritten. In einem Segmentierungsschritt wird ein Bild oder ein Bildelement in eine Menge von Elementen zerlegt oder eine Menge von Bildelementen wird zu einem höherem Element zusammengefaßt, d.h. es wird eine Struktur über ein Bild gelegt, bzw. es wird eine Struktur im Bild erkannt. Z.B. wird ein Bild in eine hierarchische Menge von Zusammenhangsgebieten zerlegt, Teilmengen von Zusammenhangsgebieten werden zu Zeilen zusammengefaßt, Zeilen werden in eine Folge von Wörtern zerlegt und diese jeweils in eine Folge von Zeichen. In einem Beschreibungsschritt werden Daten irgendwelcher Art zu Bildelementen erzeugt. Beispielsweise wird zu einem Zusammenhangsgebiet eine Konturbeschreibung erzeugt, zu einer Zeile ein umschreibendes Rechteck und ein Histogramm und zu einem Zeichen ein Klassifizierungsergebnis. Die Ergebnisse eines Segmentierungsschrittes werden als Objekte mit Links abgelegt. Die Ergebnisse eines Beschreibungsschrittes werden als Attribute abgelegt. Ein Attribut ist immer genau einem Objekt zugeordnet. Bei den Algorithmen 1-N (2) handelt es sich um beliebige Erkennungsalgorithmen. Algorithmen laufen im System oft in Form einer Pipeline ab, wobei jeder Algorithmus Ergebnisse seines Vorgängers entgegennimmt. Es gibt auch Client-/Server-Beziehungen, sowie solche mit mehreren Alternativen oder konkurrierenden Sendern oder Empfängern. Alle Algorithmen beziehen ihre Eingabedaten über die Datenzugriffsbibliothek 3 und geben ihre Ausgabedaten über diese aus. Daher bleibt für die Algorithmen der Datenzugriff immer gleich, unabhängig davon, ob Daten persistent auf Platte oder flüchtig im Hauptspeicher, zentral oder verteilt gespeichert werden. Die Algorithmen können daher ohne Änderung in die verschiedenen Systemkonfigurationen eingebaut werden.

Tabelle 1 zeigt ein einfaches Schema für ein System zum Finden von Zeilen und Wörtern in einem Dokument.

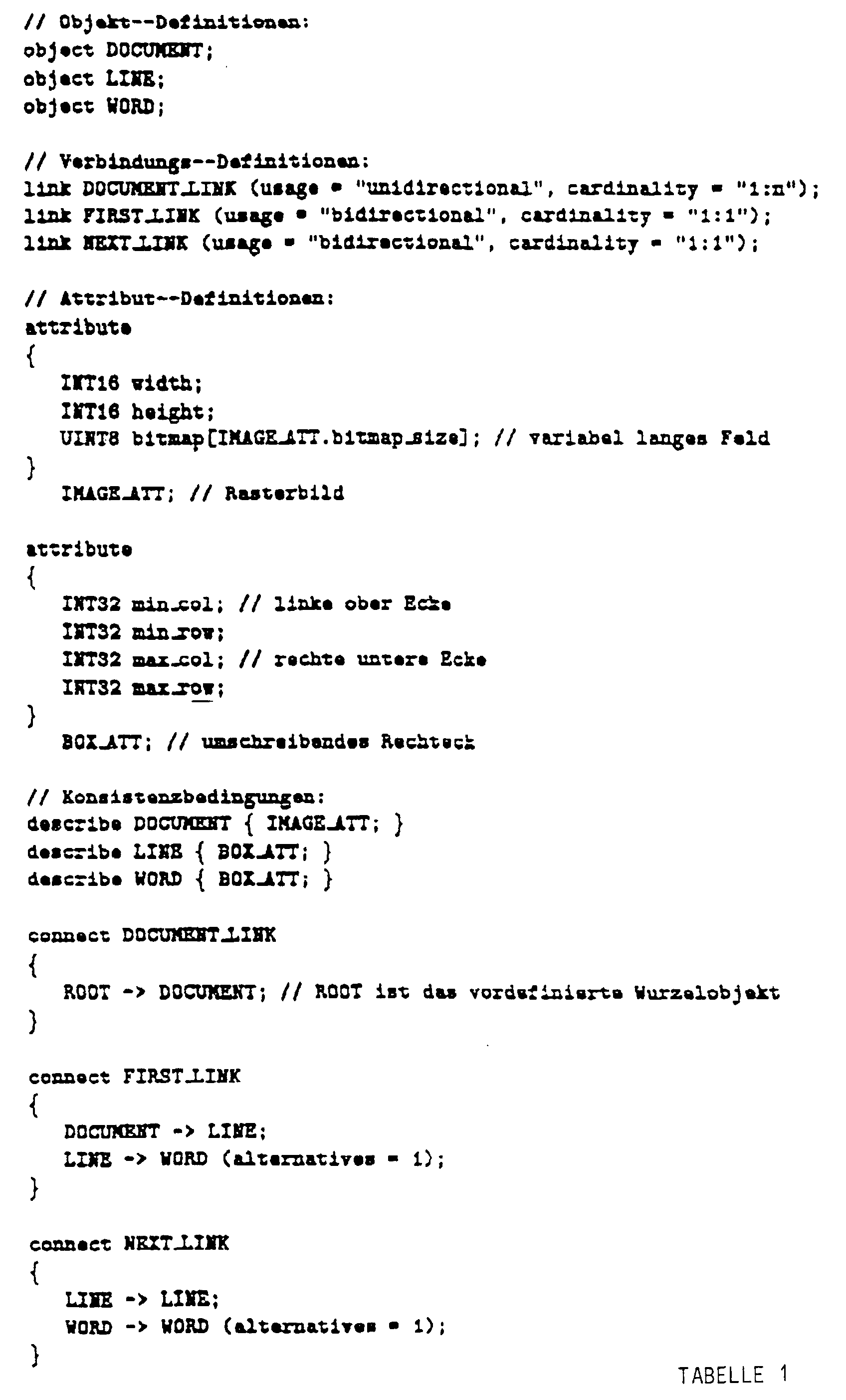

Jede Datenhaltung kann mehrere Dokumente aufnehmen. Sie können über eine 1:n-Verbindung Document_Link vom vordefinierten Wurzelobjekt ROOT aus erreicht werden. Zu jedem Dokument kann es eine Liste von Zeilen geben; zu jeder Zeile wiederum zwei alternative Listen von Wörtern. Zeilen und Wörter werden mit umschreibenden Rechtecken beschrieben, die deren Lage im Rasterbild des Dokumentes angeben. Wie die Tabelle 1 zeigt, erfolgt die Definition des Datenschemas vorzugsweise mittels einer Datendefinitionssprache.

Die Datenzugriffsbibliothek 3 enthält Funktionen zum Schreiben, Lesen und Löschen von Objekten, Verbindungen und Attributen, sowie Funktionen zum Erzeugen, Öffnen, Schließen und Vernichten von lokalen Datenhaltungen. Die Datenzugriffsbibliothek 3 wird zu einem gegebenen Datenschema von einem Generator erzeugt, der die Datendefinitionssprache interpretiert. Die generierte Datenzugriffsbibliothek setzt auf Schema-unabhängige Datenspeicherbibliotheken 4 auf, die die Speicherung der Daten realisieren, beispielsweise auf Platte oder echtzeitmäßig im Hauptspeicher.

Erfindungsgemäß ist die Grundlage für den Datenaustauschmechanismus zwischen lokalen Datenhaltungen mit verteilten Speichern eine Port-Kommunikation 5. Ein aus Erkennungsalgorithmen bestehender Prozeß kann eine beliebige Anzahl von Ports unterschiedlicher Typen (Eingangs-, Ausgangs-Client oder Serverport), von denen er Eingabedaten liest und auf die er Ausgabedaten schreibt, aufweisen. Insbesondere können über Client-Ports Auftragsdaten versendet und anschließend Ergebnisdaten empfangen werden. Über einen Server-Port empfängt ein Prozess Auftragsdaten und kann anschließend Ergebnisdaten an den Absender des Auftrages senden. Die Anzahl Ports und ihre Typspezifizierung für einen Prozess wird durch statische Konfigurierung festgelegt, ebenso, welche Ausgangs-Ports welcher Prozess mit welchen Eingangsports welcher Prozesse und welche Client-Ports welcher Prozesse mit welchen Serverports welcher Prozesse verbunden sind. Für einen Prozess bleiben daher Ort und Anzahl seiner Kommunikationspartner verborgen. Zwischen den Ports mehrerer Prozesse sind nicht nur unidirektionale Unicast-Verbindungen, sondern allgemein unidirektionale oder bidirektionale Unicast- oder Multicast-Verbindungen definierbar. Verbindungen von verschiedenen Quell-Ports können an einem einzigen Ziel-Port zusammenlaufen. Außerdem gibt es die Möglichkeit, Verbindungsalternativen einzurichten. Dabei wird bei jedem Senden auf einem Port mit Verbindungsalternativen mittels einer vorgegebenen Strategie eine der Verbindungen ausgewählt. Tabelle 2 zeigt die Portverbindungen für das Prozess-System für Zeilen- und Wortsuche, das schon im Datenschema in Tabelle 1 zugrunde liegt.

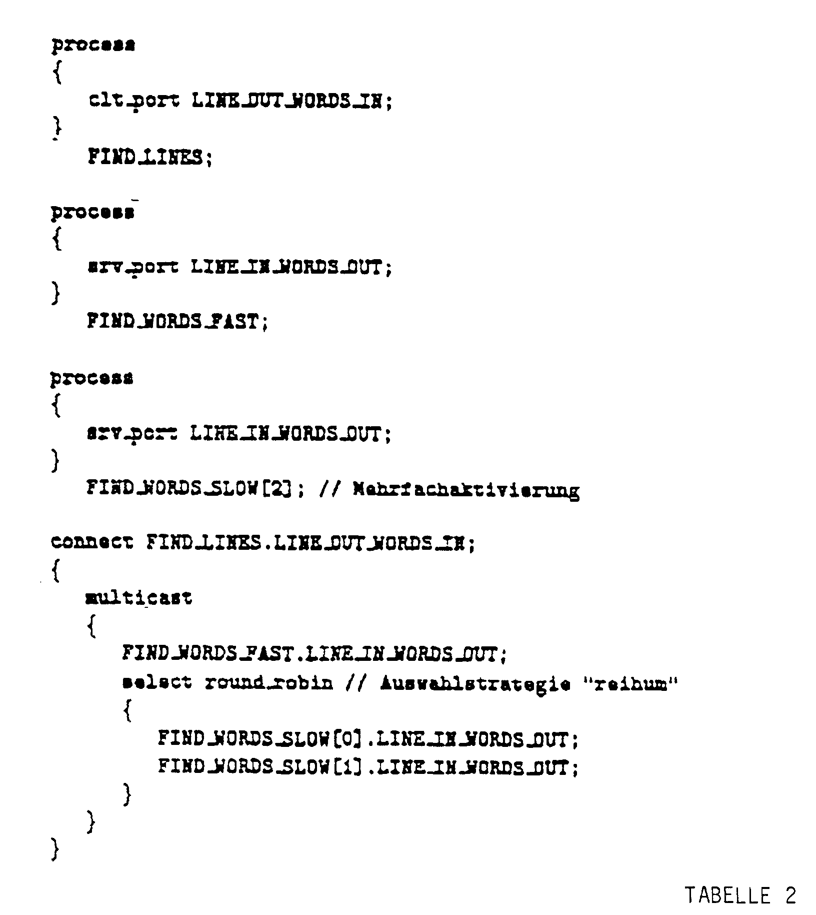

Dabei sucht ein Prozess Zeilen und beauftragt für jede gefundene Zeile zwei Prozesse, die mit alternativen Methoden die Wörter suchen. Der langsamere der beiden Wortsuchprozesse wird zweimal aktiviert, damit er nicht zum Durchsatzengpaß wird. Die Implementierung des Zeilensuchprozesses ist dabei völlig unabhängig von dieser Prozessaufteilung, da der Zeilensuchprozess lediglich Zeilen an seinem Client-Port bereitstellt und Wörter dort abholt.

Die Port-Kommunikation ermöglicht es, fertig gebundene Programme in unterschiedlichen Systemkonfigurationen ablaufen zu lassen, da die PortVerbindungen erzeugt werden, ohne die beteiligten Prozesse neu übersetzen oder binden zu müssen. Z.B. kann ein Prozess, der einen Durchsatzengpaß bildet, einfach vervielfacht werden, wie in Tabelle 1 der Prozess Find_Words_Slow. Mit Multicast-Verbindungen können Datenströme vervielfältigt und in mehreren Pfaden weiterverarbeitet werden, wie in Tabelle 1 die Prozesse Find_Words_Slow. Übersetzte und gebundene Software-Bausteine bekommen mit der Portkommunikation eine gewisse Ähnlichkeit zu Hardware-Bausteinen. Entsprechend den Anschlüssen von Hardware-Bausteinen, haben mit der Port-Kommunikation entwickelte Software-Bausteine eine gewisse Anzahl von Ports, die gemäß den dort anliegenden und erwarteten Daten frei verbunden werden können.

Mit Funktionen der Transportbibliothek 6 können vorgegebene Datenportionen oder Folgen von Datenportionen aus einer lokalen Datenhaltung ausgewählt und über einen vorgegebenen Port gesendet oder an einem vorgegebenen Port empfangen und in eine vorgegebene lokale Datenhaltung eingefügt werden. Solche Datenportionen können Objekte, Links, Atttribute, Teilbäume oder Teilgraphen aus Objekten und Links mit Attributen sein. Dabei können Objektkennungen auf systemweit eindeutige Objektnamen (Prozesskennung + Datenhaltungskennung + Objektkennung + Zeitstempel) abgebildet werden und umgekehrt. Bei dem Zeitstempel handelt es sich um einen Schutzmechanismus, durch den Objekte aus verschiedenen Generationen von Datenhalterungen voneinander unterschieden werden können.. Mit einer solchen systemweit eindeutigen Namensabbildung können Objektkopien in Mehr-Prozess-Systemen als solche erkannt werden.

Der Datenaustausch zwischen aus Erkennungsalgorithmen bestehenden Prozessen erfolgt ausschließlich derart, daß aufgrund von Aufrufen von Zugriffsfunktionen aus der Datenzugriffsbibliothek 3 vorgegebene Datenportionen und vorgebenen Ports gesendet oder von ihnen empfangen werden. Grundsätzlich ist die Idee, am lesenden Zugriff auf in einer lokalen Datenhaltung noch nicht vorhandene Daten das Empfangen von Datenportionen und am erfolgreichen Schreiben von Daten das Senden von Datenportionen anzukoppeln.
Im einfachsten Fall wird an das Öffnen einer lokalen Datenhaltung das Empfangen der Eingabedaten für die Erkennungsalgorithmen eines Prozesses aufgehängt und beim Schließen einer lokalen Datenhaltung entsprechend das Senden der Ausgabedaten. Hierzu ist bei jeder der Funktionen der Datenzugriffsbibliothek ein Hook vorgesehen, an dem entsprechende Funktionen aufgehängt werden können. Vorzugsweise werden diese Hook-Funktionen für einen Prozess jeweils in einem Modul 7 gebündelt, so daß alle Aktivitäten für den Austausch von Daten zwischen den lokalen Daten der lokalen Datenhaltungen eines Prozesses mit den Datenhaltungen anderer Prozesse zusammengefaßt sind.

Das im folgenden beschriebene Beispiel soll die Implementierung von Anwendungen bei einem Schrifterkennungssystem demonstrieren.

Die folgenden Algorithmen sollen mit Hilfe von Histogrammtechniken Textblöcke und Zeilen in einem Dokument finden.
- Algorithmus 1: Zonen-Erzeugung
   Teilt ein DOCUMENT (d.h. dessen verschmierte Zusammenhangsgebiete) in Zonen ein. Das DOCUMENT liegt als Länge von verschmierten Zusammenhangsgebieten (VZG) vor, wobei ein Zusammenhangsgebiet eine Menge benachbarter schwarzer Rasterpunkte im Rasterbild ist; ein verschmiertes Zusammenhangsgebiet ist ein Zusammenhangsgebiet in einem durch Dilatation verschmierten Rasterbild.
   Eingabedaten:
   Ein DOCUMENT-Objekt, an dem mit VZG_LINK-Links VZG-Objekte (verschmierte Zusammenhangsgebiete) hängen. Die VZG-Objekte sind jeweils mit zwei Attributen (ATT1 und ATT2) beschrieben.
   Ausgabedaten:
   ZONE-Objekte, die über ZONE_LINK-Links am DOCUMENT-Objekt hängen und denen über VZG_LINK-Links jeweiligen VZG-Objekte zugeordnet sind.
- Algorithmus 2: Histogramm-Berechnung (Histogrammtyp 1)
   Berechnet aus den verschmierten Zusammenhangsgebieten einer Zone ein Histogramm.
   Eingabedaten:
   Ein ZONE-Objekt, an dem mit VZG_LINK-Links VZG hängen. Di8e VZG-Objekte sind durch ATT1-Attribute beschrieben.
   Ausgabedaten:
   Ein HISTO1-Attribut für das ZONE-Objekt.
- Algorithmus 3: Histogramm-Berechnung (Histogrammtyp 2)
   Berechnet aus den verschmierten Zusammenhangsgebieten einer Zone ein Histogramm.
   Eingabedaten:
   wie Algorithmus 2
   Ausgabedaten:
   Ein HISTO2-Attribut für das ZONE-Objekt.
- Algorithmus 4: Histogramm-Berechnung (Histogrammtyp 3)
   Berechnet aus den verschmierten Zusammenhangsgebieten einer Zone ein Histogramm.
   Eingabedaten:
   wie Algorithmus 2, aber ATT2- statt ATT1-Attribute
   Ausgabedaten:
   Ein HISTO3-Attribut für das ZONE-Objekt.
- Algorithmus 5: Histogramm-Auswertung (Histogrammtyp 1)
   Wertet ein Zonen-Histogramm aus.
   Eingabedaten:
   Ein ZONE-Objekt mit HISTO1-Attribut.
   Ausgabedaten:
   (für das Beispiel nicht relevant)
- Algorithmus 6: Histogrammauswertung (Histogrammtyp 2)
   Wertet ein Zonen-Histogramm aus.
   Eingabedaten:
   Ein ZONE-Objekt mit HISTO2-Attribut.
   Ausgabedaten:
   (für das Beispiel nicht relevant)
- Algorithmus 7: Histogramm-Auswertung (Histogrammtyp 3)
   Wertet ein Zonen-Histogramm aus.
   Eingabedaten:
   Ein ZONE-Objekt mit HISTO3-Attribut.
   Ausgabedaten:
   (für das Beispiel nicht relevant)

Die obigen Algorithmen könnten nacheinander in der Reihenfolge ihrer Aufzählung innerhalb eines Prozesses ablaufen. Ein möglicher Ansatzpunkt für die Parallelisierung ist die Berechnung der Zonen-Histogramme. Die Berechnung eines Histogrammtyps für eine Zone ist unabhängig von der Histogramm-Berechnung für andere Zonen. Die Algorithmen können also in parallele Prozesse ausgelagert werden. Es sei angenommen, daß die Berechnung eines Histogramms vom Typ 3 erheblich länger dauert als die von Typ 1 und 2. Der entsprechende Prozess soll deshalb verdoppelt werden, damit hier zwei Zonen parallel bearbeitet werden können. Es ergeben sich die folgenden Prozesse:
- Prozess 1: Zonen-Prozess
   Zonen-Erzeugung und Histogramm-Auswertungen (Algorithmen 1, 5, 6, 7)
- Prozess 2: Histogramm-Prozess (Histogrammtyp 1)
   Histogramm-Berechnung Histogrammtyp 1 (Algorithmus 2)
- Prozess 3: Histogramm-Prozess (Histogrammtyp 2)
   Histogramm-Berechnung Histogrammtyp 2 (Algorithmus 3)
- Prozess 4: Histogrammprozess (Histogrammtyp 3)
   Histogramm-Berechnung Histogrammtyp 3 (Algorithmus 4)
- Prozess 5: Histogramm-Prozess (Histogrammtyp 3)
   Histogramm-Berechnung Histogrammtyp 3 (Algorithmus 4)

Das Vorgehen bei der Realisierung ist wie folgt:
- Schritt 1: Erstellen eines Datenschemas, Tabelle 3 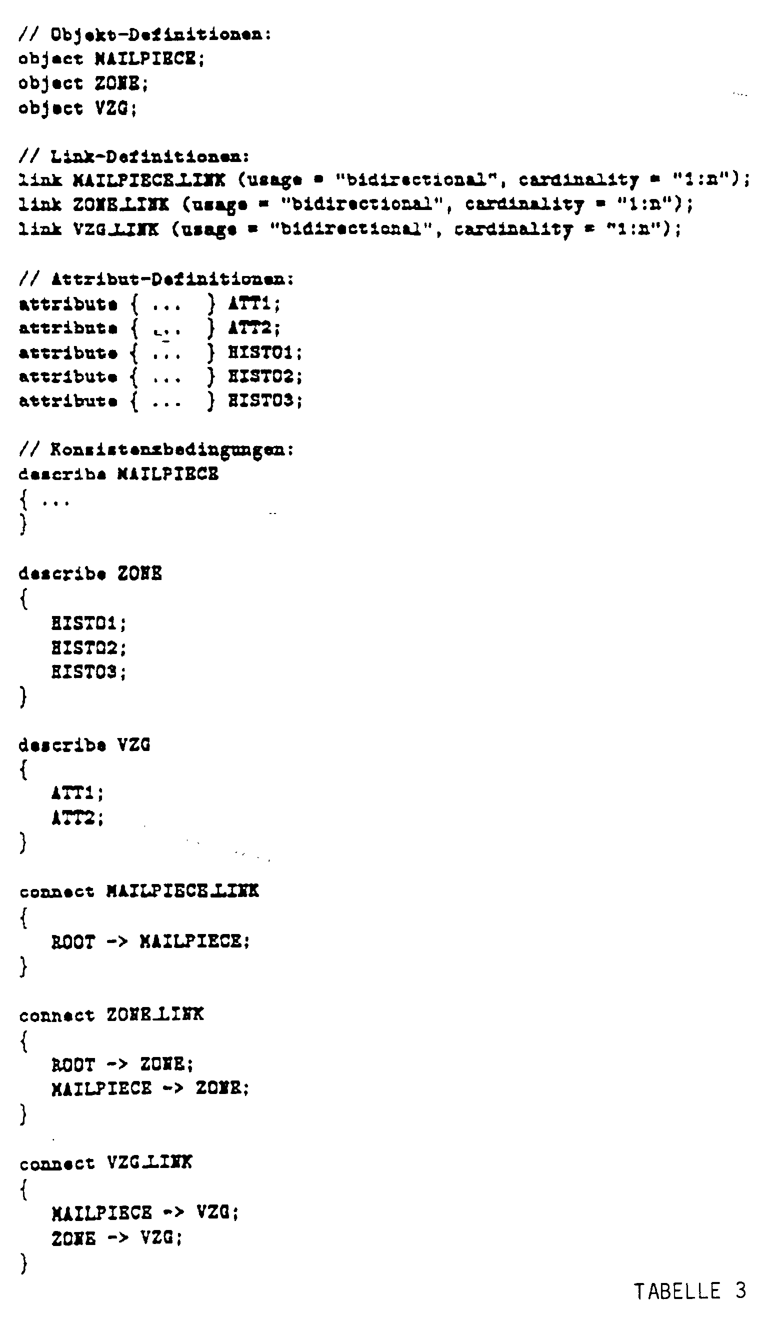
   Aus dem Datenschema wird die Datenzugriffsbibliothek 5, Fig 2 generiert.
   Dieser Schritt ist unabhängig davon, ob und wie parallelisiert wird.
- Schritt 2: Implementieren der Algorithmen
   Dieser Schritt ist ebenfalls unabhängig davon, ob und wie parallelisiert wird, vielleicht mit einer kleinen Einschränkung: Bei einem verteilten System ist wichtig, daß in irgendeiner Form erkennbar ist, wann die Ausgabedaten eines Algorithmus vollständig abgelegt sind. Bei den Algorithmen zur Histogramm-Berechnung ist das trivial, weil die Ausgabedaten nur aus einem Attribut bestehen. Beim Algorithmus zur Zonen-Erzeugung ist das nicht ganz so einfach. Hier werden ein ZONE-Objekt, ein ZONE_LINK-Links vom DOCUMENT-Objekt zum ZONE-Objekt und VZG_LINK-Links vom ZONE-Objekt zu seinen VZG-Objekten geschrieben. Die Fertigstellung der Ausgabe wird nur erkennbar, wenn man den ZONE_LINK-Links erst zum Schluß einträgt.
   Bei der Implementierung von Algorithmen ist immer zu überlegen, in welcher Reihenfolge die Ausgabedaten zweckmäßigerweise abgelegt werden. Erzeugt ein Algorithmus z.B. einen Baum von Objekten sollte das Wurzelobjekt des Baums immer erst zum Schluss in den Gesamt-Datenbestand eingehängt werden.
- Schritt 3: Implementieren der lokalen Ablaufsteuerung, Fig 2
   Bei der lokalen Ablaufsteuerung des Zonen-Prozesses sind die Aufrufe der Histogramm-Auswertungen interessant. Sie sollen wie oben spezifiziert in der Reihenfolge erfolgen, in der die Histogramme verfügbar werden.
   Vor dem ersten Datentransport muß der Zonen-Prozess zunächst Port-Verbindungen zu den Histogramm-Prozessen aufbauen.
   In den lokalen Ablaufsteuerungen der Histogramm-Prozesse ist die Initialisierung der Port-Kommunikation explizit enthalten. Sie besteht aus dem Setzen des Prozess-Namens und dem Anstoßen des Verbindungsaufbaus.
- Schritt 4: Erstellen der Port-Konfiguration, Tabelle 4 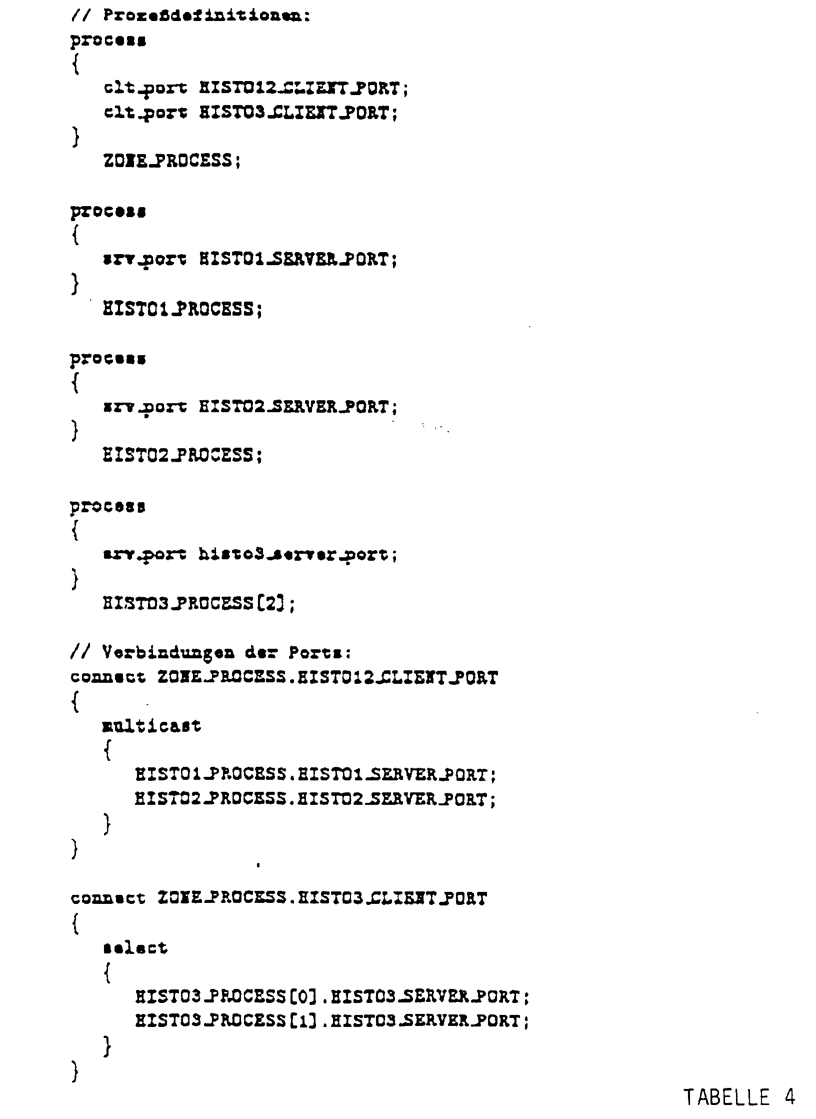
   Der Zonen-Prozess muß für die Histogrammprozesse pro Zone zwei unterschiedliche Datenportionen bereitstellen (die Histogramm-Prozesse vom Typ 1 und 2 brauchen VZG-Objekte mit ATT1-Attributen, die Histogramm-Prozesse vom Typ 3 VZG-Objekte mit ATT2-Attributen). Er braucht deshalb zwei Ports. Die Ports sind Client-Ports, weil zu den bereitgestellten Daten Ergebnisdaten erwartet werden.
   Die Histogramm-Prozesse haben jeweils einen Server-Port, über den sie ihre Eingabedaten empfangen und die Ausgabedaten an den Auftraggeber zurücksenden. Die Server-Ports der Histogramm-Prozesse vom Typ 1 und 2 sind über eine Multicast-Verbindung mit demselben Client-Port verbunden, weil sie dieselben Eingangsdaten brauchen. Die beiden Exemplare des Histogramm-Prozesses vom Typ 3 werden abwechselnd beauftragt, da ihre Server-Ports über eine Auswahl-Verbindung mit demselben Client-Port verbunden sind.
- Schritt 5: Implementieren der Transportsteuermodule 7, Fig. 2
   In den Transportsteuermodulen des Zonen-Prozesses werden die Ausgangsdaten von Algorithmus 1 beim Schreiben des zone_events als Teilbaum gesendet.
   Die Eingangsdaten der Algorithmen 6, 7, Tabelle 3, werden beim Lesen der jeweiligen Attributtypen empfangen.
   In den Transportsteuermodulen der Histogramm-Prozesse werden die Eingangsdaten beim Öffnen der Datenhaltung empfangen. Die Ausgangsdaten werden beim Schreiben des jeweiligen Attribut gesendet.
   Das Lesen aus der lokalen Datenhaltung und Verpacken der Daten beim Senden, das Auspacken und Schreiben der Daten in die lokale Datenhaltung beim Empfangen sowie die Umsetzung von lokalen Objektkennungen in globale Objektnamen und umgekehrt, ist für die Funktion der Transportsteuerung in der Transportbibliothek, Fig. 2, Tabelle 4, verborgen.

## Patentansprüche

1. Verfahren zur Mustererkennung mittels aus Erkennungsalgorithmen bestehenden Prozessen in einer Mehr-Prozessor-Umgebung und einer verteilten Datenhaltung, deren Datenmodell aus Objekten, Links zur Verbindung von Objekten und Attributen zum Schreiben besteht,
wobei das Schreiben, Lesen und Löschen von Objekten, Links und Attributen sowie das Erzeugen, Öffnen, Schließen und Vernichten von Datenhaltungen mittels Datenzugriffsfunktionen erfolgt,
**dadurch gekennzeichnet**,
daß jedem Prozeß exklusiv eine vorgegebene Anzahl von Ports zum Lesen von Eingabe- und Schreiben von Ausgabe-Daten zugeordnet ist und der Datenaustausch zwischen Prozessen derart implizit erfolgt, daß aufgrund von Aufrufen der Datenzugriffsfunktionen Datenportionen der Datenhaltungen gesendet oder empfangen werden.

2. Verfahren nach Anspruch 1, dadurch gekennzeichnet, daß mittels in einer Transportbibliothek zusammengefaßter Transportfunktionen vorgegebene Datenportionen oder Folgen von Datenportionen ausgewählt und über vorgegebene Ports gesendet werden oder an vorgegebenen Ports Datenportionen empfangen und in eine Datenhaltung eingefügt werden.

3. Verfahren nach Ansprüchen 1 - 2, dadurch gekennzeichnet, daß als Datenportionen Objekte, Links, Attribute, Teilbäume oder Teilgraphen aus Objekten vorgesehen sind.

4. Verfahren nach Ansprüchen 1 - 3, dadurch gekennzeichnet, daß aufgrund eines Öffnens einer lokalen Datenhaltung oder eines lesenden Zugriffs auf einer geöffneten lokalen Datenhaltung ein Empfang von Eingabedaten erfolgt.

5. Verfahren nach Ansprüchen 1 - 4, dadurch gekennzeichnet, daß aufgrund eines Schließens einer lokalen Datenhaltung oder eines schreibenden Zugriffes auf einer lokalen Datenhaltung ein Senden von Ausgabedaten erfolgt.

6. Verfahren nach Ansprüchen 1 - 5, dadurch gekennzeichnet, daß zwischen den Ports Verbindungsalternativen vorgesehen sind, die jeweils nach einer vorgegebenen Strategie ausgewählt werden.

7. Verfahren nach Ansprüchen 1 - 6, dadurch gekennzeichnet, daß Eingangs-, Ausgangs-, Client- und Serverports vorgesehen sind.

8. Vorrichtung zur Mustererkennung gemäß dem Verfahren des Anspruchs 1 mit einem oder mehreren Prozessoren für aus Erkennungsalgorithmen bestehenden Prozessen,
wobei das Datenmodell aus Objekten, Links zum Verbinden von Objekten und Attributen zum Beschreiben besteht, wobei Datenzugriffsfunktionen vorgesehen sind zum Schreiben, Lesen und Löschen von Objekten und zum Erzeugen, Öffnen, Schließen und Vernichten von Datenhaltungen, **dadurch gekennzeichnet**, daß lokale Datenhaltungen auf verteilten Speichern vorgesehen sind.

9. Vorrichtung nach Anspruch 8, dadurch gekennzeichnet, daß als Prozesssoren Personalcomputer, Workstations und Co-Prozessor-Netze vorgesehen sind, die über ein Netzwerk miteinander kommunizieren.

## Claims

1. Method for pattern recognition by means of processes, comprising recognition algorithms, in a multiprocessor environment, and of a distributed data storage system whose data model comprises objects, links for connecting objects, and attributes for writing, the writing, reading and deletion of objects, links and attributes, as well as the creation, opening, closing and destruction of data records being performed by means of data access functions, characterized in that each process is exclusively assigned a prescribed number of ports for reading input data and writing output data, and the data exchange between processes is performed implicitly in such a way that data portions of the data records are sent or received by calling data access functions.

2. Method according to Claim 1, characterized in that prescribed data portions or sequences of data portions are selected by means of transport functions connected in a transport library and are sent via prescribed ports, or data portions are received at prescribed ports and inserted into a data record.

3. Method according to Claims 1 - 2, characterized in that objects, links, attributes, partial trees or partial graphs of objects are provided as data portions.

4. Method according to Claims 1 - 3, characterized in that input data are received by opening a local data record or a reading access to an opened local data record.

5. Method according to Claims 1 - 4, characterized in that output data are sent by closing a local data record or a writing access to a local data record.

6. Method according to Claims 1 - 5, characterized in that alternative connections which are selected in each case according to a prescribed strategy are provided between the ports.

7. Method according to Claims 1 - 6, characterized in that input, output, client and server ports are provided.

8. Device for pattern recognition in accordance with the method of Claim 1, with one or more processors for processes comprising detection algorithms, the data model comprising objects, links for connecting objects, and attributes for describing, data access functions being provided for writing, reading and deleting objects and for creating, opening, closing and destroying data records, characterized in that local data records are provided on distributed memories.

9. Device according to Claim 8, characterized in that personal computers, workstations and coprocessor networks, which communicate with one another via a network, are provided as processors.

## Revendications

1. Procédé de reconnaissance de formes au moyen de processus constitués d'algorithmes de reconnaissance dans un environnement multiprocesseur et d'une conservation de données répartie dont le modèle de données est composé d'objets, de liens pour lier des objets et d'attributs pour écrire, l'écriture, la lecture et la suppression d'objets, de liens et d'attributs ainsi que la création, l'ouverture, la fermeture et la destruction de conservations de données étant réalisées par des fonctions d'accès aux données, caractérisé en ce que chaque processus se voit attribuer exclusivement un nombre prédéfini de ports pour lire des données d'entrée et écrire des données de sortie et que l'échange de données entre les processus se fait implicitement, de telle sorte que suite à des appels de fonctions d'accès aux données, des portions de données des conservations de données sont envoyées ou reçues.

2. Procédé selon la revendication 1, caractérisé en ce qu'au moyen de fonctions de transport regroupées dans une bibliothèque de transport, des portions de données prédéfinies ou des suites de portions de données sont sélectionnées et envoyées via des ports prédéfinis, ou des portions de données sont reçues sur des ports prédéfinis et insérées dans une conservation de données.

3. Procédé selon les revendications 1 à 2, caractérisé en ce qu'il est prévu comme portions de données des objets, des liens, des attributs, des sous-arbres ou sous-graphes d'objets.

4. Procédé selon les revendications 1 à 3, caractérisé en ce que suite à une ouverture d'une conservation de données locale ou un accès en lecture à une conservation de données locale ouverte, une réception de données d'entrée a lieu.

5. Procédé selon les revendications 1 à 4, caractérisé en ce que suite à une fermeture d'une conservation de données locale ou un accès en écriture à une conservation de données locale, une émission de données de sortie a lieu.

6. Procédé selon les revendications 1 à 5, caractérisé en ce que des connexions alternatives entre les ports sont prévues, qui sont choisies à chaque fois selon une stratégie prédéfinie.

7. Procédé selon les revendications 1 à 6, caractérisé en ce que des ports d'entrée, de sortie, de client et de serveur sont prévus.

8. Dispositif de reconnaissance de formes selon le procédé de la revendication 1 avec un ou plusieurs processeurs pour des processus constitués d'algorithmes de reconnaissance, le modèle de données étant composé d'objets, de liens pour lier des objets et d'attributs pour décrire, des fonctions d'accès aux données étant prévues pour écrire, lire et supprimer des objets et pour créer, ouvrir, fermer et détruire des conservations de données, caractérisé en ce que des conservations de données locales sur des mémoires réparties sont prévues.

9. Dispositif selon la revendication 8, caractérisé en ce qu'il est prévu comme processeurs des ordinateurs personnels, des stations de travail et des réseaux de coprocesseurs, qui communiquent entre eux via un réseau.
